# EUROPEAN PATENT SPECIFICATION

(11) **EP 1 056 033 B1**
(45) Date of publication and mention of the grant of the patent: **21.05.2003**
(21) Application number: 00203124.3
(22) Date of filing: 04.11.1994
(51) Int. Cl.: G06K 17/00

(54) **A portable terminal unit for use in an information processing system and data communication adaptor therefor**
Tragbarer Terminal für ein Informationsverarbeitungssystem und Datenübertragungsadapter dafür
Terminal portable pour un système de traitement d'information et adaptateur de données correspondant

(30) Priority: 09.11.1993 JP 30483693; 09.11.1993 JP 30483793; 09.11.1993 JP 30483593; 09.11.1993 JP 30484693; 09.11.1993 JP 30483493
(43) Date of publication of application: 29.11.2000
(62) Divisional of application: 94402489.2
(73) Proprietor: FUJITSU LIMITED, Kawasaki-shi, Kanagawa 211-8588 (JP)
(72) Inventor: Obato, Takao, Inagi-shi, Tokyo 206 (JP); Kumagai, Mitsuaki, Inagi-shi, Tokyo 206 (JP); Iura, Akihiko, c/o Fujitsu Ltd., Kawasaki-shi, Kanagawa 211-8588 (JP); Murata, Akio, c/o Fujitsu Ltd., Kawasaki-shi, Kanagawa 211-8588 (JP); Yamamoto, Shinji, c/o Fujitsu Ltd., Kawasaki-shi, Kanagawa 211-8588 (JP); Sato, Makoto, Inagi-shi, Tokyo 206 (JP); Okawado, Akira, Inagi-shi, Tokyo 206 (JP); Tsurumaru, Shinichiro, c/o Fujitsu Limited, Kawasaki-shi, Kanagawa 211-8588 (JP); Miyata, Maki, Yokohama-shi, Kanagawa 226 (JP); Kobayashi, Toshiyuki, Inagi-shi, Tokyo 206 (JP); Akasawa, Nobuaki, Inagi-shi, Tokyo 206 (JP); Okano, Masahiko, Inagi-shi, Tokyo 206 (JP); Miyanaga, Takao, Inagi-shi, Tokyo 206 (JP)
(74) Representative: Joly, Jean-Jacques

(56) References cited:
- WO-A-87/07106
- WO-A-89/04016
- US-A- 5 175 869
- US-A- 5 195 183
- US-A- 5 258 604

## Description

### BACKGROUND OF THE INVENTION

### 1. Field of the Invention

The present invention relates to a portable terminal unit for use in an information processing system and a data communication adaptor therefor.

### 2. Description of the Related Art

In recent years, portable terminal units such as hand-held terminals (HHTs) are widely used for managing commodities, reading gas and electric meters, and the like.

Generally, a hand-held terminal has a keyboard to input data, a display such as a liquid crystal display, and a printer. Various data are entered into the hand-held terminal, and the entered data are displayed. Since the hand-held terminal is hand-carried, it is designed to be compact and light A hand-held terminal often employs a memory card such as an IC card as an external storage medium. The memory card stores data entered into the hand-held terminal. The memory card is usually installed in the hand-held terminal from an upper end or a lower end thereof by a memory card loading mechanism installed therein.

However, the locations of the keyboard, the display, and the printer are more or less limited due to the method of use conditions thereof. Further, the hand-held terminal usually incorporates a battery, a modem for communicating data to a larger apparatus, and a connector for connecting the hand-held terminal to the larger apparatus whose position is generally fixed. Accordingly, the position for inserting the memory card is also limited and the width and thickness of the hand-held terminal may be increased by the installation of the memory card, thus having a negative effect on the compactness of the hand-held terminal.

In addition to designing a hand-held terminal that is compact and light, the hand-held terminal is required to have high-performance. Usually, the hand-held terminal is provided with an optical connector to communicate with a larger apparatus by using a transmission adaptor. That is, the data input into the hand-held terminal are transmitted to a larger apparatus by connecting the hand-held terminal to a transmission adaptor.

Conventionally, when the hand-held terminal communicates with the higher apparatus, an RS232C interface is used. Further, to reduce the size of the hand-held terminal, the prior art multiplexes RS232C interface signals and uses a pair of light emitting and receiving elements to send and receive data. If the hand-held terminal employs a large capacity memory, it must employ a high-speed interface to transmit data at high speed.

High-speed data transmission can be realized by employing a new interface and a connector dedicated to the interface. Installing these additional elements in addition to the conventional RS232C interface, however, is disadvantageous in terms of the compactness and light weight of the portable terminal unit.

Further, the conventional hand-held terminal is equipped with an electrical connector for connecting an external optional device. For example, a card reader for reading a magnetic card may be attached to the. hand-held terminal as an optional device to add a function that is not originally present in the hand-held terminal. In this case, the external optional device is connected to the hand-held terminal with connectors and may be fixed thereto with at least one screw.

The connectors are fixed to the respective apparatuses or to printed circuit boards of the respective apparatuses. When connecting the apparatuses together, the connectors must be accurately positioned in relation to each other. This makes the connection work complicated.

In addition, connection of the external optional device makes the size of the hand-held terminal larger when the position of the connector on the hand-held terminal is not proper.

Incidentally, since the hand-held terminal can be used under various conditions, they should be sealed to prevent moisture or liquids from entering the terminal. The hand-held terminal may have a moisture resistant seal made of, for example, rubber. The seal is generally held between an upper casing and a lower casing of the hand-held terminal.

The lower part of the hand-held terminal may be provided with a connector to be connected to an external device and a jack for charging a battery incorporated in the hand-held terminal. The connector and jack may be provided with a moisture-end-dust-resistant cover made of rubber or resin. When transmitting data to an external device or when charging the battery, the covers are removed. Since the removed covers may be lost, to prevent this, there may be provided a notch on the casing and a T-shaped projection on the cover. The T-shaped projection of the cover can then be inserted into the notch of the casing, to fix the cover to the casing. The cover is sometimes extended therefrom to cover an interface connector.

However, the prior art that puts rubber between an upper casing and a lower casing provides poor workability and makes the size of the housing of the hand-held terminal larger. That is, the rubber must be made large enough to prevent the rubber from peeling off and moisture from penetrating. Further, if the T-shaped projection of the connector cover is loose in the notch, the projection may easily slip out of the notch of the casing, to cause the cover to be lost and provide poor moisture resistance.

Since the above-described hand-held terminals are usually carried around, they usually employ batteries, in particular, rechargeable batteries, as a power source.

The transmission adaptor is interposed between the hand-held terminal and the larger apparatus, to transmit data from the hand-held terminal to the larger apparatus, or from the larger apparatus to the hand-held terminal. The hand-held terminal and transmission adaptor may be connected to each other through optical connectors using on interface such as a RS232C interfaces.

When transmitting data to the larger apparatus, the hand-held terminal must be connected to a transmission adaptor. While the hand-held terminal is connected to the transmission adaptor to transmit data to the larger apparatus, the transmission adaptor charges the battery of the hand-held terminal. In this case, the hand-held terminal is provided with a battery charging jack and the transmission adaptor has a battery charging terminal. When the hand-held terminal is connected to the transmission adaptor, the jack is connected to the terminal to start charging the battery of the hand-held terminal. Power for this charging operation is supplied by a power source circuit in the transmission adaptor.

However, the transmission adaptor must charge the hand-held terminal, and at the same time, carry out data transmission between the hand-held terminal and the larger apparatus. The charging operation requires a relatively large amount of power, so that the power source of the transmission adaptor must have a large capacity. This results in enlarging the power source of the transmission adaptor.

It is always required to minimize the hand-held terminal and transmission adaptor. If the power source of the transmission adaptor is large, the size of the transmission adaptor cannot be minimized. Also, when the transmission adaptor simultaneously carries out the charging and data transmission operations, the transmission adaptor consumes a large amount of power, thereby making the power source circuit of the transmission adaptor large.

Document US-5175869 discloses an automatic data transmission system, wherein portable terminal equipment is detachably received and mounted in an adaptor. The portable terminal equipment includes an input part for inputting input data, a data storage for storing the input data and destination information related to at least one destination, a first interface, a controller for storing the input data in the data storage in response to a first signal and for reading the input data and the destination information from the data storage and supplying the same to the first interface in response to a second signal, and a detection mechanism for generating the first and second signals. The adaptor includes a receiving and mounting therein part for receiving the portable terminal equipment, a second interface which couples to the first interface when the portable terminal equipment is set within the receiving part of the adaptor, and a communication part for automatically transmitting the input data, received via the second interface, to a destination via a communication line based on the destination information.

Document WO87/07106 discloses a portable hand-held terminal including optical bar code reader apparatus. A housing having first and second spaced apart, opposing major surfaces extending longitudinally between first and second end portions. A handle portion being interconnected to the housing and extending longitudinally along the second surface so as to provide a handle for holding the bar code reader apparatus. Additionally, the portable hand-held terminal includes an optical bar code reader apparatus utilizing a binary imaging sensor and an RF transceiver.

Document US-5195183 discloses a data communication system with communicating and recharging docking apparatus for a hand-held data terminal. In an embodiment, portable data devices can be coupled with a local area network at any of a multiplicity of points and integrated into the system on a dynamic basis. Unitary multiple docking devices each receiving a plurality of hand-held computerized data terminals may be chained in a series to a single primary controller which may have a further LAN channel including an auxiliary unit which may supply charging power to a further series of multiple docking devices, added to the system as needed. An auxiliary unit is capable of handling two-way communication without the provision of a direction control line in the channel. A LAN system may have unitary printed circuit boards or other rigid network pathways provided with multiple docking receptacles. The control for the LAN system automatically establishes identities for randomly added devices.

### SUMMARY OF THE INVENTION

The object of the present invention Is to realize a compact and light hand-held terminal having an additional high-speed switchable interface in addition to the conventional RS232C interface.

In order to accomplish the above-mentioned object, the invention concerns a portable terminal unit as in claim 1 and an adaptor as in claim 9.

### BRIEF DESCRIPTION OF THE DRAWINGS

The present invention will be more clearly understood from the description as set forth below with reference to the accompanying drawings, wherein:
Fig. 1 is a diagram illustrating the appearance of a conventional hand-held terminal and a memory card to be inserted therein;
Fig. 2 is a block diagram illustrating an internal constitution of a conventional hand-held terminal and a transmission adaptor;
Fig. 3A is a diagram illustrating a plan view and a bottom view of a conventional hand-held terminal and an external optional device;
Fig. 3B is a enlarged sectional view of a connector according to a prior art;
Fig. 4A is a cross-sectional view showing an upper casing, lower casing and a rubber seal according to a prior art;
Fig. 4B is explanatory view showing a connection of lower casing and a connector cover according to a prior art;
Fig. 5 is a block diagram illustrating an internal constitution of a conventional transmission adaptor;
Fig. 6 is a diagram illustrating a front view of a hand-held terminal according to the present invention;
Fig. 7 is a diagram illustrating a bottom view of a hand-held terminal according to the present invention;
Fig. 8 is a diagram illustrating a front view of a transmission adaptor according to the present invention;
Fig. 9 is a block diagram showing an internal constitution of the hand-held terminal according to the present invention;
Fig. 10 is a block diagram showing an internal constitution of the transmission adaptor according to the present invention;

### DESCRIPTION OF THE PREFERRED EMBODIMENTS

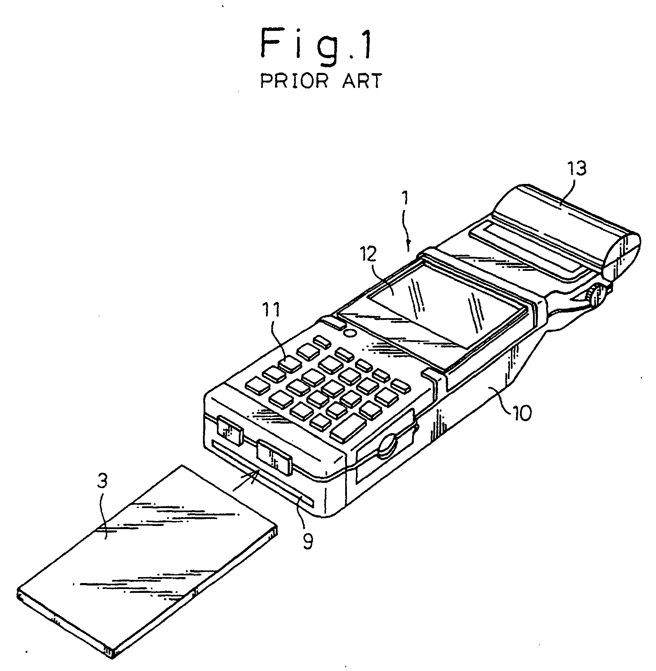

Before describing the preferred embodiments, an explanation will be given of a conventional information processing system using a portable terminal unit and a data communication adaptor therefor as shown in Figs. 1 to 5.

Figure 1 illustrates the appearance of a hand-held terminal 1 as a portable terminal unit according to a prior art. The hand-held terminal 1 has a slot 9 for inserting a memory card 3, a keyboard 11 serving as an input device, a liquid crystal display 12 serving as a display unit, a printer 13, and some connectors. The liquid crystal display 12 has a touch panel for entering data.

Various data are entered into the hand-held terminal 1, and the entered data are displayed. Since the hand-held terminal 1 is hand-carried, it is designed to be compact and light.

The hand-held terminal 1 employs a memory card 3 such as an IC card as a removable storage medium. The memory card 3 stores data entered into the hand-held terminal 1.

The memory card 3 is usually installed in the hand-held terminal 1 from an upper end or a lower end thereof. In Fig. 1, the memory card 3 is installed in the hand-held terminal 1-through the slot 9.

The hand-held terminal 1 has the keyboard 11 serving as an input device, and the display 12. The locations of these units are more or less limited due to the use thereof. Namely, the keyboard 11 and display 12 occupy substantially all of the front face of the hand-held terminal 1. The back of the hand-held terminal 1 which is not shown is provided with an optical connector. These components will be explained later.

The hand-held terminal 1 incorporates a battery serving as a power source for the hand-held terminal 1, a printer 13 for printing data, a modem for exchanging data with a larger apparatus (host computer), and a connector for connecting the hand-held terminal 1 to the host computer. As and when required, the input data is transmitted to the host computer by connecting the hand-held terminal 1 to a transmission adaptor which will be explained later.

Among these components, the battery is usually located at the lower part of the hand-held terminal 1 and the printer 13 at the upper part thereof due to the issues of weight balance and convenience in use. For compactness, the width and thickness of the hand-held terminal 1 must be minimized. The sizes of the battery and printer 13, however, are usually fixed. Accordingly, the upper and lower parts of the hand-held terminal 1 have virtually no free space due to the battery, etc.

The connector for communicating with the host computer is usually arranged at the lower part of the hand-held terminal 1 for convenience. Accordingly, it would be nearly impossible to enable loading the memory card 3 into the hand-held terminal 1 from the upper or lower end thereof if the size of the hand-held terminal is very small. To load the memory card 3 into the hand-held terminal 1 from the upper or lower end thereof, the hand-held terminal must be thicker as shown in Fig. 1.

One possibility is to load the memory card 3 into the hand-held terminal 1 from one side thereof. However, since the length of the memory card 3 is limited according to standards, the hand-held terminal 1 would have to wide enough to enclose the length of the memory card 3 if the memory card 3 is inserted entirely into the hand-held terminal 1 from the side thereof. The increased width of the hand-held terminal 1 spoils the compactness thereof.

The hand-held terminal 1 may be widened at only a portion where the memory card 3 is inserted, however, this makes the hand-held terminal 1 partly bulky, not handy to use, limits the freedom of design and makes the unit poor in appearance.

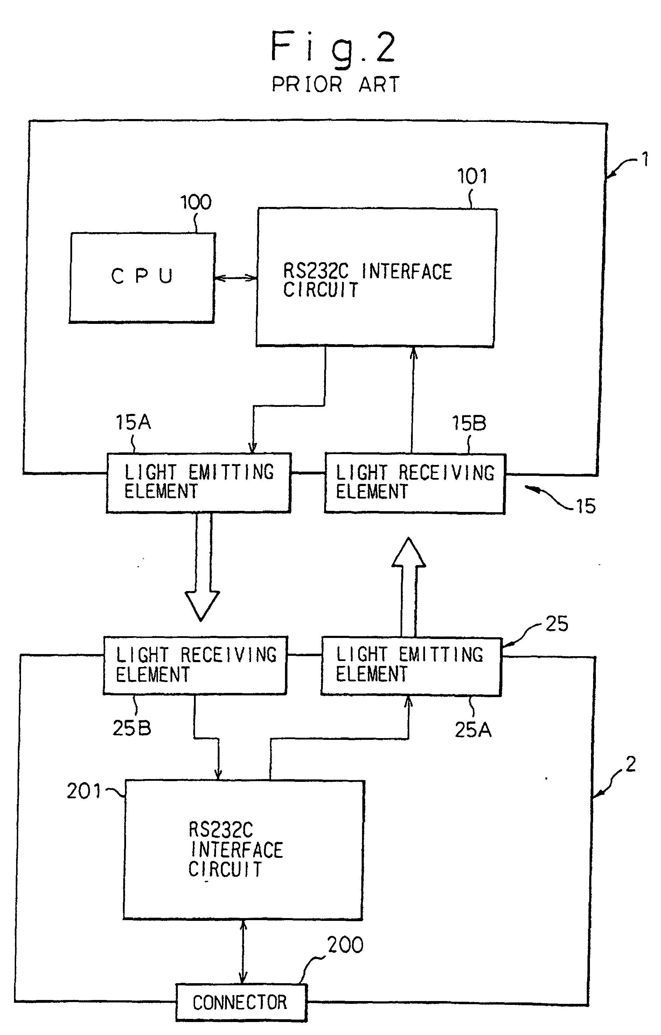

Figure 2 shows the inside of a hand-held terminal 1 and a transmission adaptor 2 according to a prior art. The hand-held terminal 1 and the transmission adaptor 2 have optical connectors 15 and 25 respectively, which send and receive data to and from each other. The optical connector 15 is comprised of a light emitting element 15A for transmitting data, and a light receiving element 15B for receiving data. The optical connector 25 is comprised of a light emitting element 25A and a light receiving element 25B.

The optical connectors 15 and 25 are non-contact connectors, which are stable even if the hand-held terminal 1 is repeatedly attached to and detached from the transmission adaptor 2. To transmit data to a larger apparatus (host computer), the hand-held terminal 1 is set on the transmission adaptor 2.

These apparatuses have, for example, RS232C interface circuits 101 and 201, and CPU 100 for totally controlling the hand-held terminal 1. To reduce the size of the hand-held terminal 1, the prior art multiplexes RS232C interface signals and uses a pair of light emitting and receiving elements 15A and 25B, and 25A and 15B.

However, if-the hand-held terminal 1 employs a large capacity memory, it must employ a high-speed interface to transmit data at high speed.

High-speed data transmission can be realized by employing a new interface and a dedicated connector for the interface. Installing these additional elements in addition to the conventional RS232C interface circuit, however, is disadvantageous in terms of compactness and light weight of the portable terminal unit.

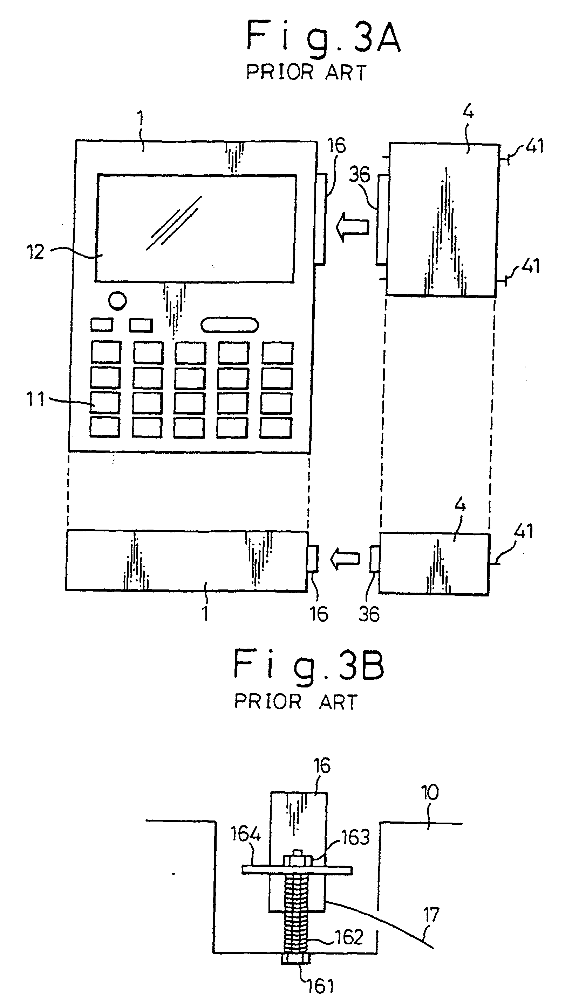

In order to add an optional function, an external optional device 3 can be attached to a portable terminal unit as shown in Fig. 3A. For example, a card reader for reading a magnetic cards may be attached to the hand-held terminal 1 to add a function that is not originally present in the hand-held terminal 1.

Figure 3A shows connection between the hand-held terminal 1 having the keyboard 11 and the display unit 12, and an external optional device 4. The external optional device 4 is connected to the hand-held terminal 1 by connectors 36 and 16 and fixed together with at least one screw 41.

The connectors 16 and 36 are fixed to the respective apparatuses or to printed boards of the respective apparatuses. When connecting the apparatuses together, the connectors must be accurately positioned in relation to each other. This makes the connection work complicated.

The position of the connectors 16 and 36 on the hand-held terminal 1 and the transmission adaptor 4 may fluctuate due to manufacturing errors. in the positions of the connectors 16 and 36 to be connected together deviate too much, it will be very difficult to connect them together. If the deviation is very large, it will be impossible to connect them to each other.

To solve this problem, connectors 16 and 36 must be accurately positioned in the manufacturing process. Such an accurate arrangement of the connectors 16 and 36 takes a great deal of labor and time. If the positions of connectors 16 and 36 deviate too much, the connectors 16 and 36 will be subject to excessive force when the hand-held terminal 1 and the transmission adaptor 4 are fixed together with screws. This will apply stress to the fitting portions of the connectors.

To cope with this situation, one of the connectors 16 and 36 may be mounted flexibly on the casing. Figure 3B shows a connector 16 fitting structure that has a certain degree of freedom in the position of a connector. This example does not fix the connector 16 to the casing 10 proper.

Threaded bolts 161 are first fixed to the casing 10. A spring 162 is arranged around each of the bolts 161. A connector 16 is set on the springs 162, and a nut 163 is set on each of the bolts 161. The springs 162 push the connector 16 upward. The connector 16 is slightly movable in a vertical direction. The diameter of the bolt 161 may be slightly smaller than that of a hole formed on a flange 164 of the connector 16 so that the connector 16 is slightly horizontally movable. Numeral 17 is a cable for connecting the connector 16 to a printed circuit board (not shown) in the hand-held terminal 1.

According to this mechanism, at least one of the connectors to be connected together is movable relative to the other, so that the accuracy in aligning the connectors need not be so accurate, and the joined connectors will not be subject to excessive stress.

Compared with fixed connectors, the movable connectors easily join corresponding apparatuses together, thereby improving workability.

This mechanism, however, additionally requires the processes of fitting bolts 161 and inserting springs 162, which increases labor and time required in manufacturing.

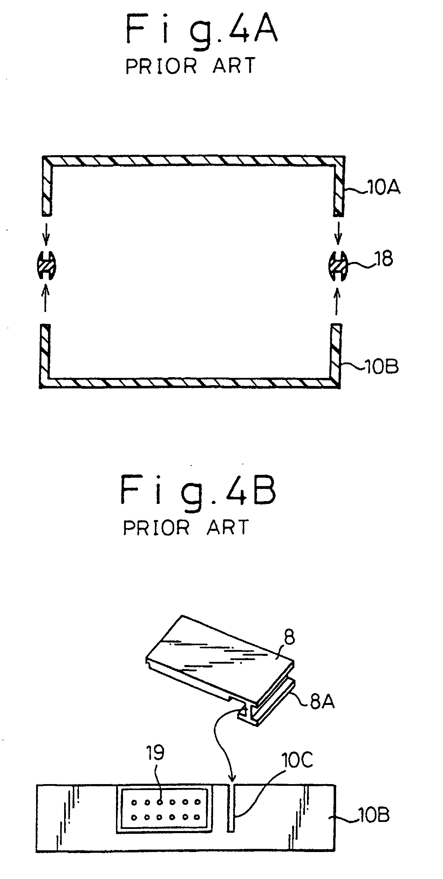

Usually, the hand-held terminal 1 has a moisture resistant seal 18 as shown in Fig. 4A made from, for example, rubber. The moisture resistant seal 18 is held between an upper casing 10A and a lower casing 10B of the hand-held terminal 1.

The lower part of the hand-held terminal 1 is provided with connectors to be connected to an external device and for charging a battery incorporated in the hand-held terminal 1. The connectors are provided with a moisture-and-dust-resistant cover made from rubber or resin. When transmitting data to an external device or when charging the battery, the covers are removed. However, the removed covers may be lost, or the covers on the connector, etc., may unexpectedly fall off. To prevent this, a prior art of Fig. 4B cuts a slot 10C in the lower casing 10B and a tab 8A on a cover 8. The tab 8A of the cover 8 is inserted into the slot 10C of the casing 10B, to fix the cover 8 to the casing 10B. The cover 8 covers the connector 19 when the connector 19 is not used.

The hand-held terminal 1 is usually provided with a buzzer for informing a user of the completion of data input. The buzzer must provide a predetermined volume of sound. For this purpose, the casing of the hand-held terminal 1 has an opening for the buzzer.

The prior art that uses rubber moisture resistant seal 18 between the upper casing 10A and the lower casing 10B provides poor workability. The moisture resistant seal 18 and casings 10A and 10B may form a gap that enables the rubber to peel off and moisture to enter the casing 10.

The connector cover 8 having the tab 8A may easily come off out of the slot 10C of the casing 10 and become lost making the casing 10 susceptible to moisture.

The buzzer opening is disadvantageous because it allows moisture to enter. To provide moisture resistance, there can be no buzzer opening. However, this results in insufficient sound volume because a buzzer installed in the hand-held terminal produces a small volume of sound.

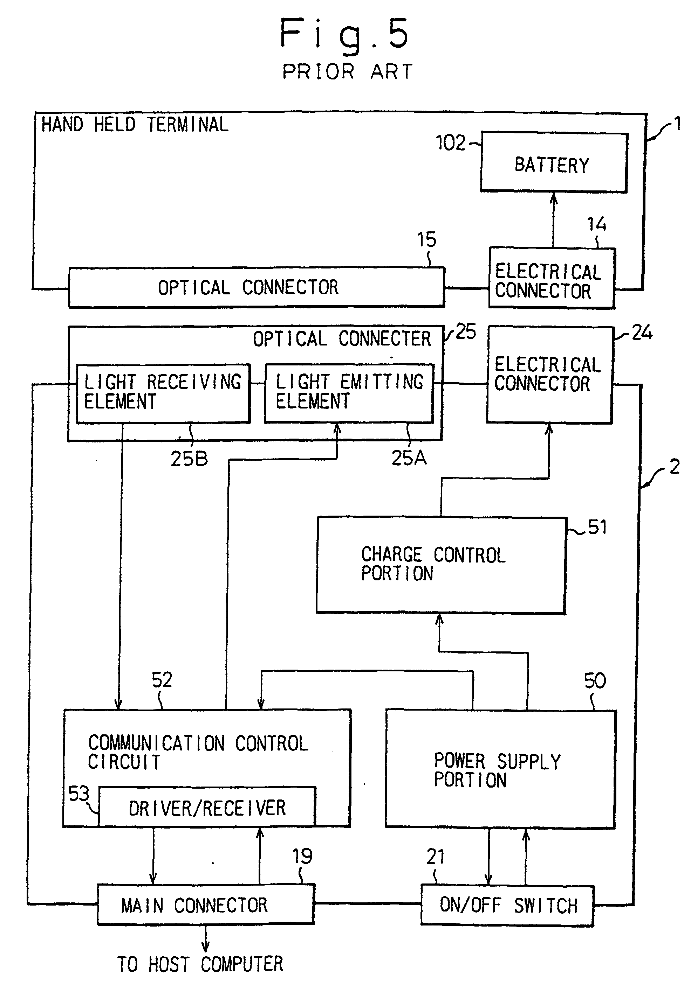

Figure 5 shows the transmission adaptor 2 and the hand-held terminal 1 according to a prior art. Numeral 102 is a battery provided in the hand-held terminal 1, for supplying power thereto. Numeral 50 is a power supply portion (power source) provided in the transmission adaptor 2. The power supply portion 50 supplies power to the transmission adaptor 1 and charges the battery 102 when ON/OFF switch 21 is ON. The ON/OFF switch is turned ON when the hand-held terminal 1 is connected to the transmission adaptor 2. Numeral 51 is a charge control portion for controlling the charging operation of the battery 102.

Numeral 52 is a communication control circuit for controlling communication between the hand-held terminal 1 and the host computer (not shown).

The transmission adaptor 2 is interposed between the hand-held terminal 1 and the host computer, to transmit data from the hand-held terminal 1 to the host computer, or from the host computer to the hand-held terminal 1. The hand-held terminal 1 and transmission adaptor 2 are connected to each other through the optical connectors 15 and 25 with the use of a interface such as an RS232C interface.

After the hand-held terminal 1 stores a given quantity of data, it must transmit the data to the host computer. The communication control circuit 52 controls data communication between the hand-held terminal 1 and the host computer. If the hand-held terminal 1 frequently transmits data to the host computer, the hand-held terminal is frequently connected to and removed from the transmission adaptor. In this case, the optical connectors 15.and 25 are advantageous because they are contactless connectors.

When transmitting data to the host computer, the hand-held terminal 1 must be connected to the transmission adaptor 2. While the hand-held terminal 1 is connected to the transmission adaptor 2 to transmit data to the host computer, the transmission adaptor 2 charges the battery 102 of the hand-held terminal 1. The lower part of the hand-held terminal 1 is provided with an electrical connector 14 for charging battery, in addition to the optical connector 15. The transmission adaptor 2 has an electrical connector 24 for charging the battery. When the hand-held terminal 1 is connected to the transmission adaptor 2, the electrical connectors 14 and 24 are connected together to start charging the battery 102 of the hand-held terminal 1. Power for this charging operation is supplied by the power supply portion 50.

The transmission adaptor 2 must charge the hand-held terminal 1, and at the same time, carry out data transmission between the hand-held terminal 1 and the host computer. The charging operation requires a relatively large amount of power, so that the power supply portion 50 of the transmission adaptor 2 must have a large capacity. This results in enlarging the power supply portion 50 of the transmission adaptor 2.

Although it is generally required to minimize the size of the hand-held terminal 1 and transmission adaptor 2, if the power supply portion 50 of the transmission adaptor 2 is large, the size of the transmission adaptor 2 cannot be reduced.

When the transmission adaptor 2 simultaneously carries out the charging and data transmission operations, the transmission adaptor 2 consumes large power, and the size of the power source circuit become large.

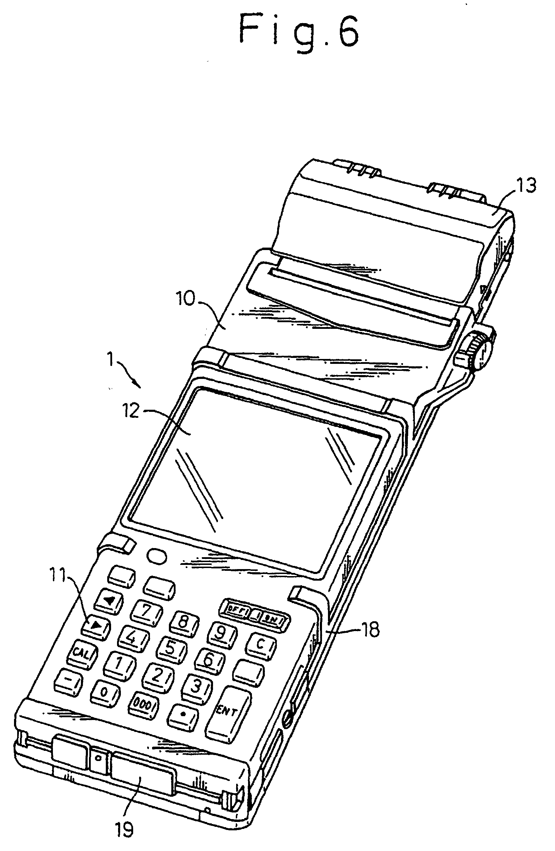

Figure 6 is a perspective view illustrating a front face of a hand-held terminal 1 according to the present invention. In Fig. 6, numeral 10 denotes a casing of the hand-held terminal 1, 11 denotes a keyboard, 12 denotes a display unit comprised of a liquid crystal display, 13 denotes a printer, 18 denotes a moisture resistant seal, and 19 denotes a main connector for communicating with the host computer. The main connector is covered by an extended part of the moisture resistant seal 18.

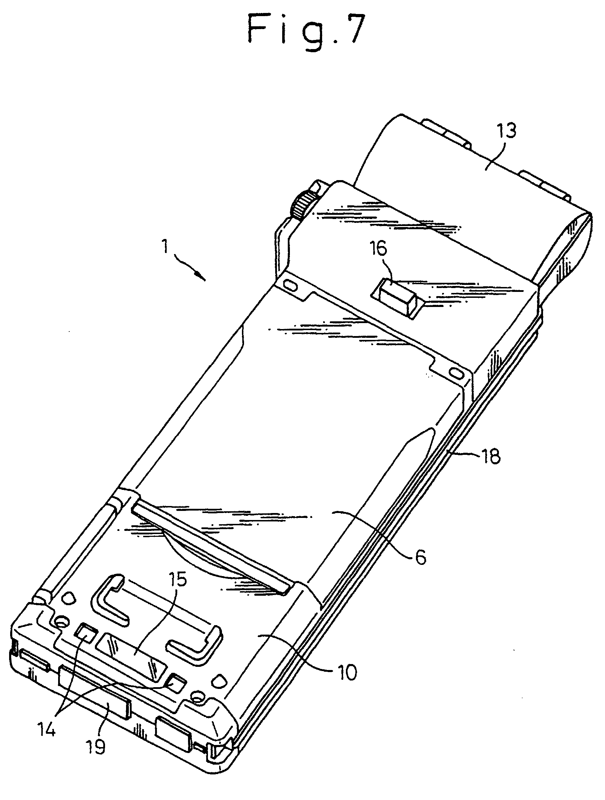

Figure 7 is a perspective view illustrating a bottom face of a hand-held terminal 1 according to the present invention. In Fig. 7, numeral 6 denotes a lid, 10 denotes a casing of the hand-held terminal 1, 13 denotes a printer, 14 denotes electrical connector for providing power to the hand-held terminal 1 to operate the hand-held terminal or charge a battery, 15 denotes an optical connector for transmitting data, 16 denotes an auxiliary connector for connecting an external optional device, 18 denotes a moisture resistant seal, and 19 denotes a main connector for communicating with the host computer. The main connector is covered by an extended part of the moisture resistant seal 18.

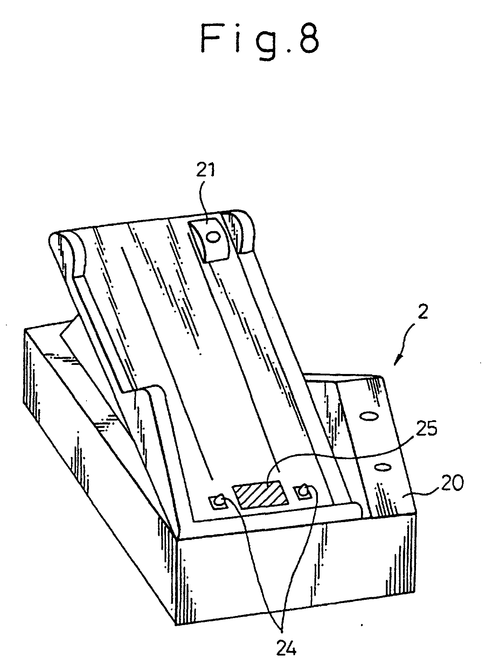

Figure 8 is a perspective view illustrating a front face of a transmission adaptor 2 according to the present invention. In Fig. 8, numeral 20 denotes a casing of the transmission adaptor 2, 21 denotes an ON/OFF switch, 24 denotes electrical connectors for supplying power to the hand-held terminal 1 to operate the hand-held terminal or charge a battery, and 25 denotes an optical connector for transmitting data. The ON/OFF switch 21 is turned ON when the hand-held terminal 1 is placed on the transmission adaptor 2.

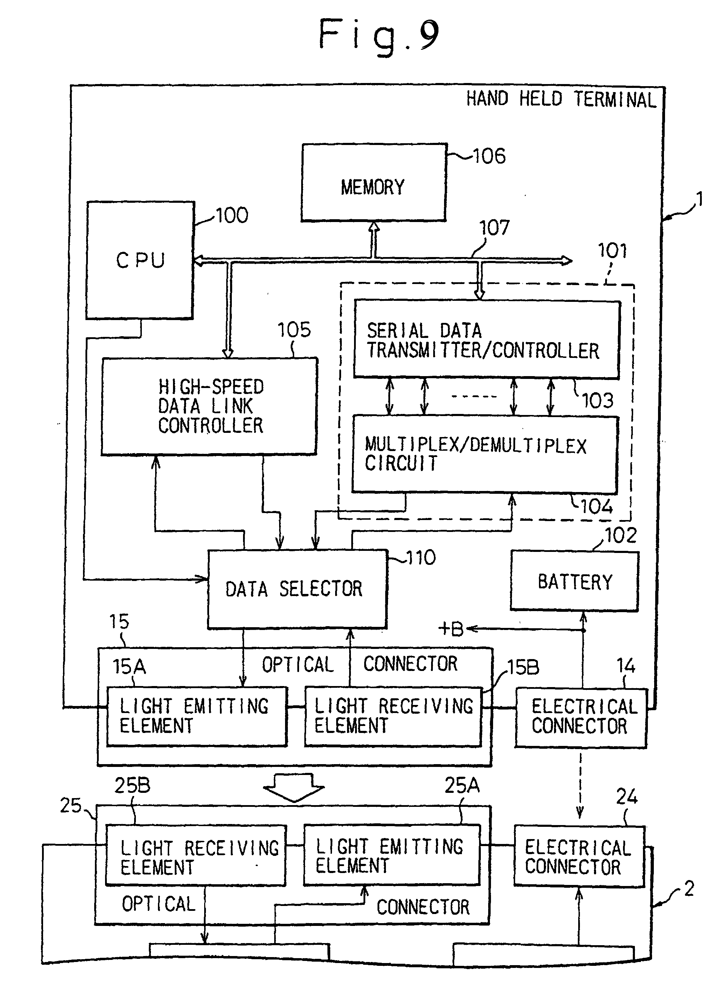

Figure 9 is a block diagram showing an internal constitution of the hand-held terminal 1 according to the present invention. The hand-held terminal 1 is equipped with an electrical connector 14 to be connected to an electrical connector 24 of the data transmitting adaptor 2, an optical connector 15 having a light emitting element 15A and a light receiving element 15B to be connected to an optical connector 25 having a light emitting element 25A and a light receiving element 25B of the data transmitting adaptor 2.

Inside the hand-held terminal 1, there is provided the CPU 100, an RS232C interface circuit 101 having a serial data transmitter/controller 103 and a multiplex/demultiplex circuit 104, a battery 102, a high-speed data link controller 105, a memory 106, a bus 107, and a data selector 110. The bus 107 connects the CPU 100, the RS232C interface circuit 101, the high-speed data link controller 105 and the memory 106 together. One of the RS232C interface circuit 101 and the high-speed data link controller 105 is selectively connected to the optical connector 15 through the data selector 110. The battery 102 provides power to the circuits and is connected to the electrical connector 14 for charging.

When the data is input to the optical connector 15 from the RS232C interface circuit 101 or the high-speed data link controller 105 through the data selector 110, the data is transmitted by the light emitting element 15A to the light receiving element 25B of the data communication adaptor 2. Conversely, the light receiving element 15B receives the data from the light emitting element 25A of the data communication adaptor 2.

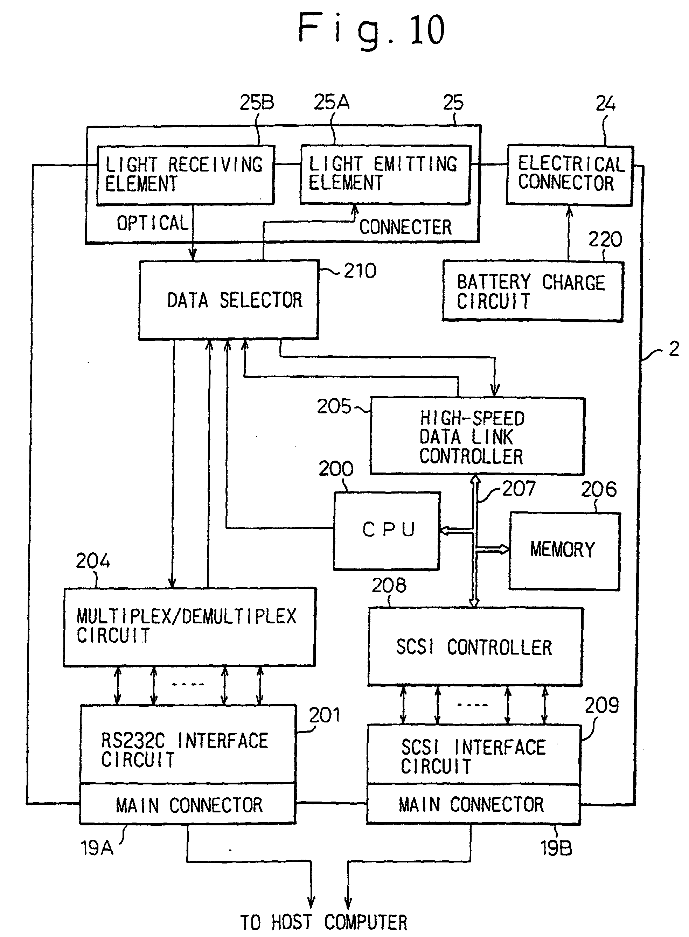

Figure 10 is a block diagram showing an internal constitution of the data transmission adaptor 2 according to the present invention. The data transmission adaptor 2 lies between the hand-held terminal 1 and a host computer (not shown) to transmit data between the hand-held terminal 1 and the host computer. The data transmitting adaptor 2 is equipped with main connectors 19A and 19B, an electrical connector 24 to be connected to the electrical connector 14 of the hand-held terminal 1, an optical connector 25 having a light emitting element 25A and a light receiving element 25B to be connected to the optical connector 15 having the light emitting element 15A and the light receiving element 15B of the hand-held terminal 1.

Inside the data transmitting adaptor 2, there is provided the CPU 200, an RS232C interface circuit 201, a multiplex/demultiplex circuit 204, a high-speed data link controller 205, a memory 206, a bus 207, SCSI controller 208, a data selector 210, and a battery charge circuit 220. The bus 207 connects a CPU 200, the high-speed data link controller 205, the memory 206, and the SCSI controller 208 mutually. One of the RS232C interface circuit 201 and the high-speed data link controller 205 is selectively connected to the optical connector 25 through the data selector 210.

The multiplex-demultiplex circuits 104 and 204 are used for data transmission through the RS232C interface. These circuits 104 and 204 multiplex RS232C signals for an external apparatus and demultiplex multiplexed RS232C signals. The serial data transmitter/controller 103 converts parallel data from the CPU 100 into serial data, adds a parity bit and start and stop bits to the serial data, and sends the resultant data. The serial data transmitter/controller 103 receives serial data, converts them into parallel data, and transfers the parallel data to the CPU 100.

The high-speed data link controllers 105 and 205, and SCSI controller 208 are high-speed interfaces. The high-speed data link controllers 105 and 205 fetch data out of a memory 106 and 206 according to a DMA method, converts the data into serial data, and sends the serial data. The high-speed data link controller 105 and 205 receive serial data, converts them into parallel data, and stores the parallel data in the memory 106 and 206 according to the DMA method.

The SCSI interface circuit 209 is a parallel interface capable of transferring a large quantity of data at high speed. To transfer data at high speed, the interface the SCSI interface circuit 209 is used instead of the RS232C interface circuit 201.

The transmission adaptor 2 has the two connectors 19A and 19B each to be connected to an apparatus having a corresponding interface. The connector 19A is for the RS232C interface circuit 210, and the connector 19B is for the SCSI interface circuit 209.

The data selectors 110 and 210 select one of the RS232C interface signal and SCSI interface signal. The operation of the data selector 110 is controlled by the CPU 100, and the operation of the data selector 210 is controlled by the CPU 200.

One of the interfaces of the transmission adaptor 2 is selected according to the host computer connected to the adaptor 2. A user can control the data selector 210 to select a required one of the RS232C and SCSI interfaces by a switch (not shown). The data selector 210 is switched accordingly, to transmit data through the selected interface.

In the hand-held computer 1, the CPU 100 provides a signal to the data selector 110 to select one of the interfaces. A user may select one of the interfaces by inserting an instruction through the keyboard of the hand-held terminal 1. The data selector 110 is switched accordingly, to transmit data through the selected interface.

The two interfaces share the light emitting elements 15A and 25A and receiving elements 15B and 25B, and the high-speed interface 105.is provided for the hand-held terminal 1 in addition to the conventional interface 101 without spoiling the compactness and light weight of the hand-held terminal 1.

As explained above, this invention adds a high-speed interface to the hand-held terminal without spoiling the compactness and light weight of the apparatus.

## Claims

1. A portable terminal unit (1) which is driven by a battery (102), and is equipped with a control circuit, a keyboard (11), and connectors, said portable terminal unit further comprising:
a processor (100)
a normal interface portion (101) provided in the control circuit for controlling data transmission between a host computer and the portable terminal unit (1);
a high-speed interface portion (105) provided in the control circuit for controlling the high-speed data transmission between the host computer and the portable terminal unit (1);
a selector (110) provided for selecting one of the normal interface portion (101) and the high-speed interface portion (105) when the data transmission is executed, said selector selecting one of the interfaces in accordance with a signal from said processor (100), and
a connector (15) connected to said selector (110), said connector being used for communication with the host computer
**characterized in that**
said connector is commonly used by said normal interface portion and by said high-speed interface portion.

2. A portable terminal unit as in claim 1, wherein said connector is an optical connector having a light emitting element (15A) and a light receiving element (15B).

3. A portable terminal unit as in claim 1 or 2, wherein said normal interface portion comprises a serial data transmitter / controller (103) and a multiplex / demultiplex circuit (104).

4. A portable terminal unit as in claim 3, wherein said multiplex /demultiplex circuit comprises an RS232C interface.

5. A portable terminal unit as in claim 3 or 4, wherein said serial data transmitter / controller (103) converts parallel data from said processor (100) into serial data, adds a parity bit and start and stop bits to said serial data, and sends the resultant data.

6. A portable terminal unit as in any of claims 1-5, wherein said high-speed interface portion receives serial data, converts them into parallel data and stores them into a memory (106) according to the DMA method.

7. A portable terminal unit as in any of claims 1-6, wherein said high-speed interface portion fetches data out of a memory (106) according to a DMA method, converts said data into serial data and sends said serial data.

8. A portable terminal unit as in any of claims 1-7, wherein a user selects one of said high-speed or normal interface portions through said keyboard.

9. A data communication adaptor (2) for a portable terminal unit (1) having a connector (15), said adaptor comprising:
a first connector (25) to be connected to said connector (15) provided in said terminal unit (1);
a normal interface portion (201) for enabling data transmission between a host computer and the portable terminal unit (1); and
a high-speed interface portion (205) for enabling high-speed data transmission between the host computer and the portable terminal unit (1) and
a selector (210) for selecting one of the normal interface portion (201) and the high-speed interface portion (205) when the data transmission is executed, said first connector (25) being commonly used by said normal interface portion (201) and by said high-speed interface portion (205).

10. A data communication adaptor as in claim 9, further comprising a third connector (19A) connected to said normal interface portion and a fourth connector (19B) connected to said high-speed interface portion.

11. A data communication adaptor as in claim 10, wherein said third and fourth connectors are configured to connect the communication adaptor to the host computer.

12. A data communication adaptor as in any of claims 9 to 11, wherein the operation of said selector (210) is controlled by a processor (200).

13. A data communication adaptor as in any of claims 9-12, wherein said first connector is an optical connector having a light emitting element (25A) and a light receiving element (25B).

14. A data communication adaptor (2) as in any of claims 9-13, further comprising a multiplex/demultiplex circuit (204) for transmitting data through the normal interface portion (201).

15. A data communication adaptor (2) as in any of claims 9-14, wherein said high-speed interface portion (205) fetches data out of a memory (206) according to a DMA method, converts said data into serial data and sends said serial data.

16. A data communication adaptor (2) as in any of claims 9-15, wherein said high-speed interface portion (205) receives serial data, converts them into parallel data and stores said parallel data in a memory according to a DMA method.

17. A data communication adaptor (2) as in any of claims 9-16, wherein said selector is controlled by a CPU (200).

18. A data communication adaptor (2) as in any of claims 9-17, further comprising a switch for selecting one of said high-speed or normal interface portions.

## Patentansprüche

1. Tragbare Terminaleinheit (1), die durch eine Batterie (102) betrieben wird und mit einer Steuerschaltung, einer Tastatur (11) und Verbindern versehen ist, welche tragbare Terminaleinheit ferner umfaßt:
einen Prozessor (100);
einen normalen Schnittstellenabschnitt (101), der in der Steuerschaltung zum Steuern der Datenübertragung zwischen einem Hostcomputer und der tragbaren Terminaleinheit (1) vorgesehen ist;
einen Hochgeschwindigkeitsschnittstellenabschnitt (105), der in der Steuerschaltung zum Steuern der Hochgeschwindigkeitsdatenübertragung zwischen dem Hostcomputer und der tragbaren Terminaleinheit (1) vorgesehen ist;
einen Selektor (110), der zum Selektieren von einem von dem normalen Schnittstellenabschnitt (101) und dem Hochgeschwindigkeitsschnittstellenabschnitt (105) vorgesehen ist, wenn die Datenübertragung ausgeführt wird, welcher Selektor eine der Schnittstellen gemäß einem Signal von dem Prozessor (100) selektiert; und
einen Verbinder (15), der mit dem Selektor (110) verbunden ist, welcher Verbinder zur Kommunikation mit dem Hostcomputer verwendet wird,
**dadurch gekennzeichnet, daß**
der Verbinder durch den normalen Schnittstellenabschnitt und durch den Hochgeschwindigkeitsschnittstellenabschnitt gemeinsam verwendet wird.

2. Tragbare Terminaleinheit nach Anspruch 1, bei der der Verbinder ein optischer Verbinder ist, der ein Lichtemissionselement (15A) und ein Lichtempfangselement (15B) hat.

3. Tragbare Terminaleinheit nach Anspruch 1 oder 2, bei der der normale Schnittstellenabschnitt einen Serielldatensender/Controller (103) und eine Multiplex-/Demultiplexschaltung (104) umfaßt.

4. Tragbare Terminaleinheit nach Anspruch 3, bei der die Multiplex-/Demultiplexschaltung eine RS232C-Schnittstelle umfaßt.

5. Tragbare Terminaleinheit nach Anspruch 3 oder 4, bei der der Serielldatensender/Controller (103) parallele Daten von dem Prozessor (100) in serielle Daten konvertiert, ein Paritätsbit und Start- und Stoppbits zu den seriellen Daten hinzufügt und die resultierenden Daten sendet.

6. Tragbare Terminaleinheit nach irgendeinem der Ansprüche 1 - 5, bei der der Hochgeschwindigkeitsschnittstellenabschnitt serielle Daten empfängt, diese in parallele Daten konvertiert und sie in einem Speicher (106) gemäß dem DMA-Verfahren speichert.

7. Tragbare Terminaleinheit nach irgendeinem der Ansprüche 1 - 6, bei der der Hochgeschwindigkeitsschnittsteilenabschnitt Daten gemäß einem DMA-Verfahren aus einem Speicher (106) holt, die Daten in serielle Daten konvertiert und die seriellen Daten sendet.

8. Tragbare Terminaleinheit nach irgendeinem der Ansprüche 1 - 7, bei der ein Benutzer einen von den Hochgeschwindigkeits- und normalen Schnittstellenabschnitten über die Tastatur selektiert.

9. Datenkommunikationsadapter (2) für eine tragbare Terminaleinheit (1), die einen Verbinder (15) hat, welcher Adapter umfaßt:
einen ersten Verbinder (25), der mit dem genannten Verbinder (15) zu verbinden ist, der in der Terminaleinheit (1) vorgesehen ist;
einen normalen Schnittstellenabschnitt (201) zum Ermöglichen einer Datenübertragung zwischen einem Hostcomputer und der tragbaren Terminaleinheit (1); und
einen Hochgeschwindigkeitsschnittstellenabschnitt (205) zum Ermöglichen einer Hochgeschwindigkeitsdatenübertragung zwischen dem Hostcomputer und der tragbaren Terminaleinheit (1); und
einen Selektor (210) zum Selektieren von einem von dem normalen Schnittstellenabschnitt (201) und dem Hochgeschwindigkeitsschnittstellenabschnitt (205), wenn die Datenübertragung ausgeführt wird, wobei der erste Verbinder (25) durch den normalen Schnittstellenabschnitt (201) und durch den Hochgeschwindigkeitsschnittstellenabschnitt (205) gemeinsam verwendet wird.

10. Datenkommunikationsadapter nach Anspruch 9, ferner mit einem dritten Verbinder (19A), der mit dem normalen Schnittstellenabschnitt verbunden ist, und einem vierten Verbinder (19B), der mit dem Hochgeschwindigkeitsschnittsteilenabschnitt verbunden ist.

11. Datenkommunikationsadapter nach Anspruch 10, bei dem die dritten und vierten Verbinder konfiguriert sind, um den Kommunikationsadapter mit dem Hostcomputer zu verbinden.

12. Datenkommunikationsadapter nach irgendeinem der Ansprüche 9 bis 11, bei dem die Operation des Selektors (210) durch einen Prozessor (200) gesteuert wird.

13. Datenkommunikationsadapter nach irgendeinem der Ansprüche 9 - 12, bei dem der erste Verbinder ein optischer Verbinder ist, der ein Lichtemissionselement (25A) und ein Lichtempfangselement (25B) hat.

14. Datenkommunikationsadapter (2) nach irgendeinem der Ansprüche 9 - 13, ferner mit einer Multiplex-/Demultiplexschaltung (204) zum Übertragen von Daten über den normalen Schnittstellenabschnitt (201).

15. Datenkommunikationsadapter (2) nach irgendeinem der Ansprüche 9 - 14, bei dem der Hochgeschwindigkeitsschnittstellenabschnitt (205) Daten gemäß einem DMA-Verfahren aus einem Speicher (206) holt, die Daten in serielle Daten konvertiert und die seriellen Daten sendet.

16. Datenkommunikationsadapter (2) nach irgendeinem der Ansprüche 9 - 15, bei dem der Hochgeschwindigkeitsschnittstellenabschnitt (205) serielle Daten empfängt, diese in parallele Daten konvertiert und die parallelen Daten in einem Speicher gemäß einem DMA-Verfahren speichert.

17. Datenkommunikationsadapter (2) nach irgendeinem der Ansprüche 9 - 16, bei dem der Selektor durch eine CPU (200) gesteuert wird.

18. Datenkommunikationsadapter (2) nach irgendeinem der Ansprüche 9 - 17, ferner mit einem Schalter zum Selektieren von einem von den Hochgeschwindigkeits- und normalen Schnittstellenabschnitten.

## Revendications

1. Unité de terminal portable (1) qui est alimentée par un accumulateur (102) et qui est équipée d'un circuit de commande, d'un clavier (11) et de connecteurs, ladite unité de terminal portable comprenant en outre :
un processeur (100);
une partie d'interface normale (101) qui est prévue dans le circuit de commande pour commander une transmission de données entre un ordinateur hôte et l'unité de terminal portable (1) ;
une partie d'interface haute vitesse (105) qui est prévue dans le circuit de commande pour commander la transmission de données haute vitesse entre l'ordinateur hôte et l'unité de terminal portable (1) ;
un sélecteur (110) qui est prévu pour sélectionner une partie prise parmi la partie d'interface normale (101) et la partie d'interface haute vitesse (105) lorsque la transmission de données est exécutée, ledit sélecteur sélectionnant l'une des interfaces conformément à un signal en provenance dudit processeur (100) ; et
un connecteur (15) qui est connecté audit sélecteur (110), ledit connecteur étant utilisé pour une communication avec l'ordinateur hôte,
**caractérisée en ce que** :
ledit connecteur est utilisé de façon commune par ladite partie d'interface normale et par ladite partie d'interface haute vitesse.

2. Unité de terminal portable selon la revendication 1, dans laquelle ledit connecteur est un connecteur optique qui comporte un élément émetteur de lumière (15A) et un élément récepteur de lumière (15B).

3. Unité de terminal portable selon la revendication 1 ou 2, dans laquelle ladite partie d'interface normale comprend un émetteur/contrôleur de données série (103) et un circuit de multiplexage/démultiplexage (104)

4. Unité de terminal portable selon la revendication 3, dans laquelle ledit circuit de multiplexage/démultiplexage comprend une interface RS232C.

5. Unité de terminal portable selon la revendication 3 ou 4, dans laquelle ledit émetteur/contrôleur de données série (103) convertit des données parallèles en provenance dudit processeur (100) selon des données série, additionne un bit de parité et des bits de démarrage et d'arrêt auxdites données série et envoie les données résultantes.

6. Unité de terminal portable selon l'une quelconque des revendications 1 à 5, dans laquelle ladite partie d'interface haute vitesse reçoit des données série, les convertit selon des données parallèles et les stocke dans une mémoire (106) conformément au procédé DMA.

7. Unité de terminal portable selon l'une quelconque des revendications 1 à 6, dans laquelle ladite partie d'interface haute vitesse recherche des données à partir d'une mémoire (106) conformément à un procédé DMA, convertit lesdites données selon des données série et envoie lesdites données série.

8. Unité de terminal portable selon l'une quelconque des revendications 1 à 7, dans lequel un utilisateur sélectionne une partie prise parmi ladite partie d'interface haute vitesse et ladite partie d'interface normale par l'intermédiaire dudit clavier.

9. Adaptateur de communication de données (2) pour une unité de terminal portable (1) comportant un connecteur (15), ledit adaptateur comprenant :
un premier connecteur (25) destiné à être connecté sur ledit connecteur (15) prévu dans ladite unité de terminal (1) ;
une partie d'interface normale (201) pour établir une transmission de données entre un ordinateur hôte et l'unité de terminal portable (1) ;
une partie d'interface haute vitesse (205) pour permettre une transmission de données haute vitesse entre l'ordinateur hôte et l'unité de terminal portable (1) ; et
un sélecteur (210) pour sélectionner une interface prise parmi la partie d'interface normale (201) et la partie d'interface haute vitesse (205) lorsque la transmission de données est exécutée, ledit premier connecteur (25) étant utilisé de façon commune par ladite partie d'interface normale (201) et par ladite partie d'interface haute vitesse (205).

10. Adaptateur de communication de données selon la revendication 9, comprenant en outre un troisième connecteur (19A) qui est connecté à ladite partie d'interface normale et un quatrième connecteur (19B) qui est connecté à ladite partie d'interface haute vitesse.

11. Adaptateur de communication de données selon la revendication 10, dans lequel lesdits troisième et quatrième connecteurs sont configurés pour connecter l'adaptateur de communication à l'ordinateur hôte.

12. Adaptateur de communication de données selon l'une quelconque des revendications 9 à 11, dans lequel le fonctionnement dudit sélecteur (210) est commandé par un processeur (200).

13. Adaptateur de communication de données selon l'une quelconque des revendications 9 à 12, dans lequel ledit premier connecteur est un connecteur optique et comporte un élément émetteur de lumière (25A) et un élément récepteur de lumière (25B).

14. Adaptateur de communication de données (2) selon l'une quelconque des revendications 9 à 13, comprenant en outre un circuit de multiplexage/démultiplexage (204) pour transmettre des données par l'intermédiaire de la partie d'interface normale (201).

15. Adaptateur de communication de données (2) selon l'une quelconque des revendications 9 à 14, dans lequel ladite partie d'interface haute vitesse (205) recherche des données à partir d'une mémoire (206) conformément à un procédé DMA, convertit lesdites données selon des données série et envoie lesdites données série.

16. Adaptateur de communication de données (2) selon l'une quelconque des revendications 9 à 15, dans lequel ladite partie d'interface haute vitesse (205) reçoit des données série, les convertit selon des données parallèles et stocke lesdites données parallèles dans une mémoire conformément à un procédé DMA.

17. Adaptateur de communication de données (2) selon l'une quelconque des revendications 9 à 16, dans lequel ledit sélecteur est commandé par une unité centrale de traitement ou CPU (200).

18. Adaptateur de communication de données (2) selon l'une quelconque des revendications 9 à 17, comprenant en outre un commutateur pour sélectionner soit ladite partie d'interface haute vitesse, soit ladite partie d'interface normale.
